# FASCICULE DE BREVET EUROPEEN

(11) **EP 2 970 573 B1**
(45) Date de publication et mention de la délivrance du brevet: **25.04.2018**
(21) Numéro de dépôt: 14715358.9
(22) Date de dépôt: 12.03.2014
(51) Int. Cl.: C08G 64/02, C08G 64/30

(54) **PROCÉDÉ DE SYNTHÈSE D'OLIGOMÈRES DE GLYCÉROL ACYLÉS**
VERFAHREN ZUR SYNTHESE VON OLIGOMEREN AUS ACYLIERTEM GLYCEROL
PROCESS FOR THE SYNTHESIS OF OLIGOMERS OF ACYLATED GLYCEROL

(30) Priorité: 14.03.2013 FR 1352297
(43) Date de publication de la demande: 20.01.2016
(73) Titulaire: Agronutrition, 31390 Carbonne (FR); Institut National Polytechnique de Toulouse, 31400 Toulouse (FR); Institut National De La Recherche Agronomique, 75007 Paris (FR)
(72) Inventeur: MOULOUNGUI, Zéphirin, F-31000 Toulouse (FR); ABDEL BAKI, Zaher, 31500 Toulouse (FR); VALENTIN, Romain, F-31400 Toulouse (FR); ZEBIB, Bachar, F-31280 Aigrefeuille (FR)
(74) Mandataire: Cabinet BARRE LAFORGUE & associés
(86) Numéro de dépôt international: PCT/FR2014/050563
(87) Numéro de publication internationale: WO 2014/140480

(56) Documents cités:
- FR-A1- 2 874 217
- FR-A1- 2 880 025

## Description

L'invention concerne un procédé de synthèse d'oligomères de glycérol qui sont acylés, et plus particulièrement un procédé de synthèse d'esters carboniques linéaires de glycérol α/α'-acylé sous forme d'oligomères et une composition organique comprenant au moins un tel oligomère de glycérol acylé.

Dans toute la suite :
- les termes « carbone α » et/ou « carbone α' » et/ou « carbone α/α' » du glycérol, désignent les deux atomes de carbone du glycérol qui sont porteurs chacun de deux atomes d'hydrogène et par « carbone β » du glycérol, l'atome de carbone qui est porteur d'un seul atome d'hydrogène, et ;
- le terme « oligomère » désigne un composé polymère comprenant un nombre de monomères compris entre 2 et 50.

On connait (par exemple de FR 2 880 025) un procédé d'acylation de polycarbonates de glycérol, de poly-glycérols, de copolymères [(α-hydroxyméthyl) oxyéthylène / (α-hydroxyméthyl) éthylène carbonate], de copolymères [(α-hydroxyalkyle) oxyéthylène / (α-hydroxyalkyle) éthylène carbonate] et de copolymères [(α-alkyl) oxyéthylène / (α-hydroxyalkyle) éthylène carbonate]. Dans un tel procédé, on traite au moins l'un des polymères poly-hydroxylés par un agent d'acylation des groupes hydroxyles des polymères poly-hydroxylés dans un mélange à deux phases.

Par ailleurs, la revue générale « Aliphatic cyclic carbonates and spiroorthocarbonates as monomers », Rokicki G., (2000), Prog. Polym. Sci., 25 pp259-342 décrit la polymérisation du carbonate d'éthylène ou du carbonate de propylène en présence d'un catalyseur de transestérification, à une température respectivement de 170°C et 180°C. Cette revue enseigne que la polymérisation des carbonates cycliques de glycérol à 5 chaînons pour former des composés poly(éthylène carbonate) ou poly(propylène carbonate) est thermodynamiquement défavorable et que cette polymérisation s'accompagne d'une décarboxylation importante et d'un dégagement de CO₂ corrélé avec la formation de poly(éther-carbonate)s présentant une proportion de fonction carbonate au plus égale à 50 % en mole. Une telle polymérisation nécessite en outre des produits de départ d'origine pétrochimique (carbonate d'éthylène et du carbonate de propylène), une durée de réaction très longue -notamment de plusieurs jours-, et est incompatible avec son exploitation à l'échelle industrielle. En outre, un tel procédé ne conduit qu'à des oligomères de faible poids moléculaire.

L'invention vise à proposer un procédé de synthèse d'oligomères de glycérol acylés qui soit compatible avec une exploitation à l'échelle industrielle, notamment à température modérée et avec des faibles durées de réaction -en particulier en moins de 24 heures -, de façon simple et peu coûteuse, à partir de réactifs issus de ressources naturelles -notamment de ressources végétales- qui sont renouvelables.

L'invention vise aussi à proposer un tel procédé pouvant être mis en oeuvre à partir de précurseurs dans un même réacteur (« one-pot ») et en une étape ou avec un faible nombre d'étapes.

L'invention vise en particulier un tel procédé qui ne nécessite pas d'étapes et de moyens complexes de mise sous pression réduite et de maintien sous pression réduite du milieu de réaction.

L'invention vise aussi à proposer un tel procédé permettant d'obtenir une composition organique comprenant des oligomères de glycérol qui sont acylés pouvant être utilisée telle quelle, c'est-à-dire sans nécessiter d'extraction ni de purification subséquente desdits oligomères.

L'invention vise aussi à proposer un tel procédé qui soit respectueux de la santé humaine ou animale et de l'environnement, et en particulier ne mette pas en oeuvre des composés toxiques pour l'homme et/ou pour l'environnement, et ne nécessite pas d'étape complexe d'élimination finale de réactifs et/ou de produits toxiques en eux-mêmes pour l'homme et/ou pour l'environnement.

L'invention vise aussi à proposer un tel procédé qui ne conduise pas à la formation de déchets nuisibles pour l'environnement et/ou pour la santé humaine ou animale.

L'invention vise aussi à proposer un tel procédé permettant l'obtention d'une composition organique d'oligomères de glycérol acylés qui soit directement exploitable, notamment à titre d'intrant agricole pour le traitement des plantes et/ou comme adjuvant de vectorisation.

L'invention vise aussi à proposer une composition organique pouvant trouver des applications en particulier dans le domaine des oligomères de glycérol acylés « biosourcés », c'est-à-dire des oligomères susceptibles d'être obtenus à partir de ressources naturelles et essentiellement biologiques, -notamment de ressources végétales-.

L'invention vise aussi en particulier à proposer une telle composition qui ne présente pas de toxicité pour l'homme et/ou pour l'animal et/ou les végétaux. L'invention vise aussi en particulier à proposer une telle composition qui soit respectueuse de l'environnement et qui n'est pas susceptible de libérer dans l'environnement des composés qui sont toxiques ou néfastes pour le monde végétal ou animal.

Pour ce faire, l'invention concerne un procédé de synthèse d'oligomères de glycérol acylés, caractérisé en ce qu'on fait réagir :
▪ au moins un précurseur choisi dans le groupe formé des esters carboniques de glycérol cycliques α/α'-acylés de formule (IV) suivante : 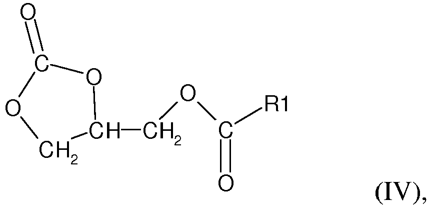 dans laquelle ;
   R1 représente un groupement organique formés d'au moins deux atomes liés par des liaisons covalentes et appartenant au groupe formé du carbone (C), de l'hydrogène (H), de l'oxygène (O) et de l'azote (N), et ;
▪ au moins un catalyseur métallique choisi dans le groupe formé des sels de cations métalliques, des composés organométalliques et des oxydes métalliques, et ;
▪ au moins un amorceur organique choisi dans le groupe formé des composés organiques hydroxylés -notamment des polyols-,
à une température de réaction inférieure à 220°C -notamment comprise entre 150°C et 220°C -notamment comprise entre 150°C et 200°C, de préférence de l'ordre de 170°C à 180°C.

Un procédé de synthèse d'oligomères de glycérol acylés selon l'invention est respectueux de l'environnement et permet la valorisation de ressources naturelles renouvelables -notamment de ressources végétales-.

Un procédé selon l'invention permet d'obtenir des oligomères de glycérol qui sont acylés. En particulier, un tel procédé selon l'invention permet d'obtenir des oligomères de glycérol α/α'-acylés.

Un procédé selon l'invention permet en particulier d'obtenir des esters carboniques linéaires de glycérol α/α'-acylés de formule (I) générale suivante : 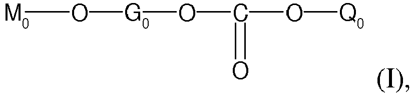 dans laquelle :
- M₀ est choisi dans le groupe formé d'un hydrogène (H) et d'un groupement organique d'au moins deux atomes liés par des liaisons covalentes et appartenant au groupe formé du carbone (C), de l'hydrogène (H) et de l'oxygène (O);
- Q₀ représente un groupement organique d'au moins deux atomes liés par des liaisons covalentes et appartenant au groupe formé du carbone (C), de l'hydrogène (H) et de l'oxygène (O) ;
- G₀ est choisi dans le groupe formé de :
   ➢ 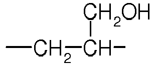 et ;
   ➢ des groupements d'atomes de formule (II) générale suivante : 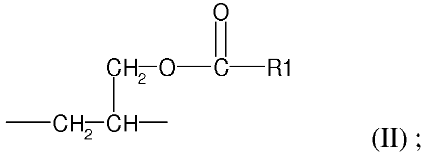
dans laquelle R1 est choisi parmi les groupements organiques formés d'au moins deux atomes liés par des liaisons covalentes et appartenant au groupe formé du carbone (C), de l'hydrogène (H) et de l'oxygène (O).

Les inventeurs ont découvert qu'il est possible de réaliser la synthèse d'oligomères de glycérol qui sont acylés -notamment sous forme d'esters carboniques linéaires de glycérol α/α'-acylés - de formule générale (I) sans former aucun composé toxique pour l'homme et/ou pour l'environnement, par mise en contact d'au moins un précurseur de formule générale (IV), d'au moins un catalyseur métallique et d'au moins un amorceur organique à une température de réaction inférieure à 220°C, pendant une durée réduite -notamment de l'ordre de 2 heures-. Cette mise en contact est avantageusement effectuée par simple mélange de chaque précurseur avec chaque catalyseur métallique et chaque amorceur organique, ce mélange réactionnel étant placé à la température de réaction.

Avantageusement et selon l'invention, dans une première étape on mélange et on chauffe le(s) précurseur(s), le(s) catalyseur(s) et l'(les) amorceur(s) organique(s) dans un réacteur clos étanche aux gaz de façon à atteindre la température de réaction et une pression, dite pression autogène, supérieure à la pression atmosphérique dans le réacteur clos, puis, à la température de réaction, dans une deuxième étape, on réalise une fuite de composition gazeuse de façon à diminuer la pression dans le réacteur et on maintient la température de réaction dans le réacteur pendant une durée supérieure à 5 minutes.

La mise en contact est avantageusement effectuée par simple mélange de chaque précurseur avec chaque catalyseur métallique et chaque amorceur organique, ce mélange réactionnel étant placé à la température de réaction et sous pression autogène supérieure à la pression atmosphérique, générée par le chauffage du mélange réactionnel dans le réacteur hermétiquement clos. Le choix de chaque précurseur ester carbonique de glycérol cyclique α/α'-acylé, de chaque amorceur organique et de chaque catalyseur, de préférence placé sous une pression autogène -notamment une pression comprise entre 1000 et 5000 hPa- à une température de réaction inférieure à 220°C, notamment comprise entre 150°C et 220°C, permet d'obtenir un oligomère de glycérol acylé -en particulier un ester carbonique linéaire de glycérol α/α'-acylé et notamment sous forme d'oligomère-présentant une proportion molaire de groupement ester carbonique linéaire de glycérol par rapport au nombre total de monomère comprise entre 30% et 50%.

La combinaison précurseur(s) / catalyseur(s) métallique(s) / amorceur(s) organique(s) avec une température de réaction inférieure à 220°C et de préférence avec une pression autogène supérieure ou égale à la pression atmosphérique, notamment une pression comprise entre 1000 et 5000 hPa, en particulier de l'ordre de 3000 hPa, permet l'ouverture du cycle à 5-chainons du précurseur ester carbonique de glycérol cyclique α/α'-acylé de formule (IV).

Un procédé selon l'invention peut être mis en oeuvre avec un seul précurseur, un seul catalyseur métallique et un seul amorceur organique. En variante, un procédé selon l'invention peut être mis en oeuvre avec plusieurs précurseurs et/ou plusieurs catalyseurs métalliques et/ou plusieurs amorceurs organiques. Le choix de chaque précurseur, de chaque catalyseur métallique et de chaque amorceur organique est effectué en fonction de la composition organique à obtenir.

De façon totalement inattendue, il s'avère que la réaction d'un précurseur choisi dans le groupe formé des esters carboniques de glycérol cycliques α/α'-acylés de formule (IV) en présence à la fois d'un catalyseur métallique et d'un amorceur organique, suffit pour permettre l'ouverture du cycle à cinq chaînons à une température de réaction inférieure à 220°C et l'obtention d'oligomères de glycérol qui sont acylés -notamment d'esters carboniques linéaires de glycérol α/α'-acylés, c'est à dire sans perte totale des groupements esters carboniques-. Une explication possible de ce phénomène surprenant serait que le catalyseur permettrait l'ouverture catalytique du cycle d'un premier précurseur par l'amorceur organique, puis de façon synergique une attaque subséquente de l'amorce ainsi formée sur un deuxième précurseur conduisant à une oligomérisation :
- soit par une attaque nucléophile de l'amorceur organique sur le carbone du carbonyle du précurseur et conduisant à la formation d'un ester carbonique linéaire de glycérol α/α'-acylé,
- soit par une attaque nucléophile sur l'un des atomes de carbone du précurseur conduisant à la formation irréversible d'un groupement hydroxyle par décarbonatation spontanée.

Avantageusement et selon l'invention, on laisse en contact le(s) précurseur(s), le(s) catalyseur(s) et le(s) amorceurs organiques à la température de réaction pendant une durée comprise entre 5 min et 3 heures.

Dans ce mode de réalisation avantageux de ce procédé, et selon l'invention, on met en contact chaque précurseur, chaque catalyseur métallique et chaque amorceur organique dans le réacteur, puis on ferme ledit réacteur hermétiquement aux gaz, puis on chauffe le mélange du(des) précurseur(s), du(des) catalyseur(s) et du(des) amorceurs de façon que la température dans le réacteur atteigne une température de réaction comprise entre 150°C et 220°C et de façon à placer le mélange liquide sous pression, dite pression autogène, dans ledit réacteur, puis on ajuste la pression à l'intérieur du réacteur à une valeur comprise entre la valeur de la pression autogène et la pression atmosphérique pendant une durée nécessaire pour permettre la formation d'au moins un ester carbonique linéaire de glycérol α/α'-acylé de formule (I) générale.

Les inventeurs ont observé qu'une telle pression autogène est avantageuse pour permettre l'initiation de l'oligomérisation, l'ouverture du cycle du précurseur libérant un hydroxyle du glycérol et la formation d'oligomères de glycérol qui sont acylés et en particulier d'esters carboniques linéaires de glycérol α/α'-acylé de formule (I) générale. Ils ont aussi observé que, de façon avantageuse, l'ajustement -notamment par l'établissement d'une fuite de composition gazeuse du réacteur- de la pression à l'intérieur du réacteur à une valeur comprise entre la valeur de la pression autogène et la pression atmosphérique permet de contrôler la formation des esters carboniques de glycérol α/α'-acylés.

Avantageusement, lorsque le mélange formé atteint la température de réaction et la pression autogène, on ouvre le réacteur de façon à diminuer la pression à l'intérieur du réacteur. Pour ce faire :
- on réalise une fuite de composition gazeuse du réacteur de façon à ajuster la pression dudit réacteur à une valeur de pression comprise entre la valeur de la pression atmosphérique et la valeur de pression autogène, atteinte dans le réacteur clos à la température de réaction, et ;
- on maintient la température de réaction pendant une durée adaptée pour permettre une oligomérisation d'au moins une partie de la quantité de précurseur et la formation de nouveaux oligomères de glycérol qui sont acylés.

Avantageusement, au moins un amorceur organique est un amorceur nucléophile. Un tel amorceur est adapté pour pouvoir former une liaison covalente avec un précurseur par attaque nucléophile de l'amorceur sur le carbonyle du précurseur, pour pouvoir libérer un groupement hydroxyle du précurseur apte à réagir avec une deuxième molécule de précurseur et pour pouvoir former des oligomères de glycérol acylés selon l'invention -notamment au moins un ester carbonique linéaire de glycérol α/α'-acylé de formule (I)- et présentant une extrémité terminale fonctionnalisée.

Avantageusement et selon l'invention, on utilise le glycérol à titre d'amorceur organique.

Avantageusement, en variante, avec le glycérol à titre d'amorceur organique, un procédé selon l'invention permet l'obtention d'oligomères de glycérol qui sont acylés, notamment d'esters carboniques linéaires de glycérol α/α'-acylés de formule (I) générale et dans lesquels le groupement organique Q₀ est choisi dans le groupe formé de CH₂OH-CHOH-CH₂O- et de (CH₂OH)₂CH-O-. Avantageusement, M₀ est un hydrogène. Les esters carboniques linéaires de glycérol α/α'-acylés sont de formule (XI) ou (XII) générales suivantes : 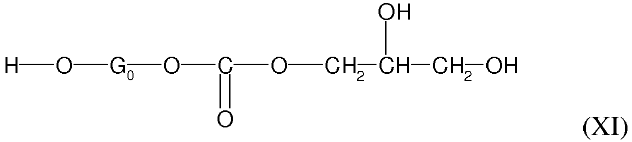 et ;

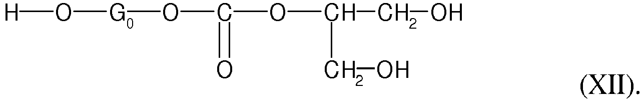

Avantageusement et selon l'invention, au moins un catalyseur métallique est choisi dans le groupe formé du sulfate de zinc (ZnSO₄), du stéarate de zinc (Zn(C₁₈H₃₅O₂)₂), du sulfate de fer (FeSO₄), du phosphate ferrique (FePO₄), du sulfate de manganèse (MnSO₄), de l'oxyde de zinc (ZnO), du carbonate de calcium (Ca₂CO₃), du carbonate de sodium (Na₂CO₃), du carbonate de potassium (K₂CO₃) et du sulfate de sodium (Na₂SO₄).

Avantageusement, au moins un catalyseur métallique est choisi dans le groupe formé des catalyseurs homogènes. Avantageusement, il est aussi possible de choisir au moins un catalyseur métallique dans le groupe formé des catalyseurs hétérogènes.

Avantageusement, la pression autogène dans le réacteur est comprise entre la pression atmosphérique -notamment de l'ordre de 1000 hPa- et 5000 hPa.

Avantageusement et selon l'invention, lors de la deuxième étape on laisse en contact le(s) précurseur(s), le(s) catalyseur(s) et le(s) amorceurs organiques à la température de réaction pendant une durée comprise entre 5 minutes et 3 heures.

Avantageusement, le groupement R1 d'au moins un précurseur est choisi dans le groupe formé des groupements alkyles comprenant de 1 à 22 atomes de carbone.

Avantageusement, le groupement hydrocarboné R1 d'au moins un précurseur est choisi dans le groupe formé :
∘ des groupements alkyles saturés de formule générale -CₙH₂ₙ₊₁ dans laquelle n est un nombre entier compris entre 1 et 22, et ;
∘ des groupements insaturés -notamment des groupements mono-insaturés de formule générale -CₘH₂ₘ₋₁ dans laquelle m est un nombre entier compris entre 1 et 22 -et des groupements poly-insaturés-.

Avantageusement et selon l'invention, le groupement R1 d'au moins un précurseur est choisi dans le groupe formé du méthyle (-CH₃), de l'éthyle (-CH₂-CH₃), du *n*-propyle (-CH₂-CH₂-CH₃), de l'*iso*-propyle (-CH(CH₃)₂), du *n*-butyle (-CH₂-CH₂-CH₂-CH₃), de l'*iso*-butyle (-CH₂-CH(CH₃)₂), du *tertio*-butyle (-C(CH₃)₃), du *n*-pentyle (-CH₂-(CH₂)₃-CH₃), du *n*-hexyle (-(CH₂)₅-CH₃), du n-octyle (-(CH₂)₇-CH₃), de l'undécyle (-(CH₂)₁₀-CH₃), du pentadécyle (-(CH₂)₁₄-CH₃) et de l'heptadécyle (-(CH₂)₁₆-CH₃).

Avantageusement et selon l'invention, le groupement R1 d'au moins un précurseur est choisi dans le groupe formé des groupements hydrocarbonés insaturés, notamment du 9-ène-decyle (-CH=CH-(CH₂)₇-CH₃) et du 9-ène-heptadecyle (-(CH₂)₇-CH=CH-(CH₂)₇-CH₃).

Rien n'empêche de former le mélange réactionnel dans un tiers solvant. Néanmoins, dans un procédé selon l'invention, on utilise avantageusement un ester carbonique de glycérol cyclique α/α'-acylé de formule (IV) à titre de solvant et de précurseur. On ne procède alors à aucune addition d'un tiers solvant -notamment d'un tiers solvant organique- distinct du(des) précurseur(s), du(des) amorceur(s) et du(des) catalyseur(s).

Avantageusement et selon l'invention, on réalise la synthèse des oligomères de glycérol acylés sans séparation et/ou de purification d'intermédiaires de synthèse.

Avantageusement et selon l'invention, on choisit au moins un précurseur dans le groupe formé de l'acétate de 4-méthyl-1,3-dioxolan-2-one, du *n*-propanoate de 4-méthyl-1,3-dioxolan-2-one, du *n*-butanoate de 4-méthyl-1,3-dioxolan-2-one, du 2-méthyl-propanoate de 4-méthyl-1,3-dioxolan-2-one, du *n*-pentanoate de 4-méthyl-1,3-dioxolan-2-one, du 3-méthyl-butanoate de 4-méthyl-1,3-dioxolan-2-one, du 2,2-diméthyl-propanoate de 4-méthyl-1,3-dioxolan-2-one, du *n*-hexanoate de 4-méthyl-1,3-dioxolan-2-one, du *n*-heptanoate de 4-méthyl-1,3-dioxolan-2-one, du *n*-octanoate de 4-méthyl-1,3-dioxolan-2-one, du *n*-nonanoate de 4-méthyl-1,3-dioxolan-2-one, du *n*-dodecanoate de 4-méthyl-1,3-dioxolan-2-one, du *n*-hexadecanoate de 4-méthyl-1,3-dioxolan-2-one, du *n*-heptadecanoate de 4-méthyl-1,3-dioxolan-2-one, du 2-ène-undécanoate de 4-méthyl-1,3-dioxolan-2-one, du 9-ène-hexadecanoate de 4-méthyl-1,3-dioxolan-2-one et du 9-ène-octadecanoate de 4-méthyl-1,3-dioxolan-2-one.

Avantageusement et selon l'invention, on choisit au moins un précurseur dans le groupe formé :
- de l'acétate de 4-méthyl-1,3-dioxolan-2-one (ou ester carbonique de glycérol acétylé, ECG-C2), dans lequel R1 est le méthyle ;
- du *n*-heptanoate de 4-méthyl-1,3-dioxolan-2-one (ou ester carbonique de glycérol heptanoylé, ECG-C7) dans lequel R1 est l'hexyle ;
- du *n*-nonanoate de 4-méthyl-1,3-dioxolan-2-one (ou ester carbonique de glycérol nonanoylé, ECG-C9) dans lequel R1 est l'octyle ;
- du 2-ène-undécanoate de 4-méthyl-1,3-dioxolan-2-one (ou ester carbonique de glycérol undécylènoylé, ECG-C11:1) dans lequel R1 est le 1-ène-décyle ;
- du 9-ène-octadécanoate de 4-méthyl-1,3-dioxolan-2-one (ou ester carbonique de glycérol oléylé, ECG-C18:1) dans lequel R1 est le 9-ène heptadécyle.

Avantageusement, dans un procédé selon l'invention, le mélange est formé par mise en contact d'une quantité massique d'au moins un précurseur de formule (IV), d'une quantité massique de catalyseur métallique dans un rapport précurseur(s) de formule (IV) / catalyseur métallique compris entre 100 et 500 et d'une quantité efficace d'amorceur(s) organique(s).

L'invention vise aussi une composition organique obtenue par un procédé selon l'invention. Elle concerne donc une composition organique caractérisée en ce qu'elle comprend au moins un oligomère de glycérol qui est acylé et au moins un ester carbonique de glycérol cyclique α/α'-acylé de formule (IV) suivante :

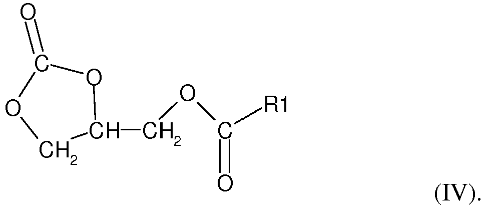

L'invention concerne donc aussi une composition organique caractérisée en ce qu'elle comprend :
- au moins un ester carbonique linéaire de glycérol α/α'-acylé -notamment sous forme d'oligomère- de formule (I) générale suivante : 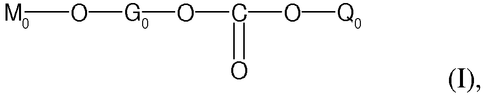 dans laquelle :
   ▪ M₀ est choisi dans le groupe formé d'un hydrogène (H) et d'un groupement organique d'au moins deux atomes liés par des liaisons covalentes et appartenant au groupe formé du carbone (C), de l'hydrogène (H) et de l'oxygène (O) ;
   ▪ Q₀ représente un groupement organique d'au moins deux atomes liés par des liaisons covalentes et appartenant au groupe formé du carbone (C), de l'hydrogène (H) et de l'oxygène (O) ;
      ▪ G₀ est choisi dans le groupe formé de :
         ➢ 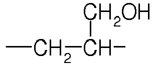 et ;
         ➢ des groupements d'atomes de formule (II) générale suivante : 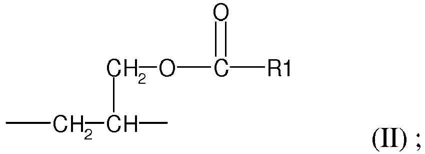 dans laquelle R1 est choisi parmi les groupements organiques formés d'au moins deux atomes liés par des liaisons covalentes et appartenant au groupe formé du carbone (C), de l'hydrogène (H) et de l'oxygène (O), et ;
- au moins un ester carbonique de glycérol cyclique α/α'-acylé de formule (IV) suivante :

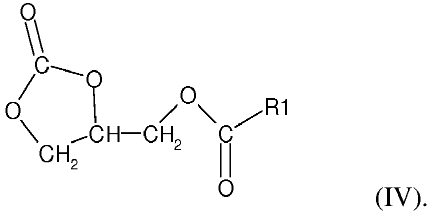

Avantageusement et selon l'invention, la composition organique comprend aussi au moins un catalyseur métallique choisi dans le groupe formé des sels de cations métalliques des composés organométalliques et des oxydes métalliques.

Avantageusement et selon l'invention, une composition selon l'invention comprend aussi au moins un amorceur organique choisi dans le groupe formé des composés organiques hydroxylés -notamment des composés organiques hydroxylés présentant une chaine principale comprenant de 3 à 10 atomes de carbone et des polyols, en particulier du glycérol-.

Une composition organique selon l'invention comprend aussi avantageusement au moins un composé de formule (VII) générale suivante : 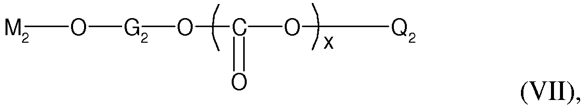 dans laquelle :
- M₂ est choisi dans le groupe formé d'un hydrogène (H) et d'un groupement organique d'au moins deux atomes liés par des liaisons covalentes et appartenant au groupe formé du carbone (C), de l'hydrogène (H) et de l'oxygène (O);
- Q₂ représente un groupement organique d'au moins deux atomes liés par des liaisons covalentes et appartenant au groupe formé du carbone (C), de l'hydrogène (H) et de l'oxygène (O) ;
- x est un nombre entier égal à 0 ou à 1 ;
- G₂ est un groupement d'atomes de formule (II) générale suivante : 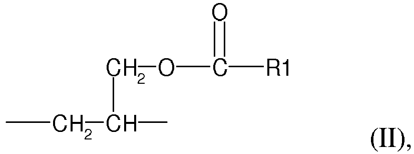 et ;
   dans laquelle R1 est choisi dans le groupe formé des groupements formés d'au moins deux atomes liés par des liaisons covalentes et appartenant au groupe formé du carbone (C), de l'hydrogène (H) et de l'oxygène (O).

Avantageusement, une composition selon l'invention comprend une quantité d'au moins un ester carbonique linéaire de glycérol α/α'-acylés de formule (I) générale et une quantité d'au moins un précurseur ester carbonique de glycérol cyclique α/α'-acylé de formule (IV).

Avantageusement et selon l'invention, l'ester carbonique linéaire de glycérol α/α'-acylé de formule (I) générale présente une masse molaire supérieure à 400 g/mole.

Avantageusement et selon l'invention, la composition selon l'invention est une composition thixotrope.

L'invention concerne également un procédé de synthèse d'oligomères de glycérol qui sont acylés -notamment un procédé de synthèse d'esters carboniques linéaires de glycérol α/α'-acylés- et une composition organique comprenant de tels d'oligomères de glycérol qui sont acylés -notamment de tels esters carboniques linéaires de glycérol α/α'-acylés- caractérisés en combinaison par tout ou partie des caractéristiques mentionnées ci-dessus ou ci-après.

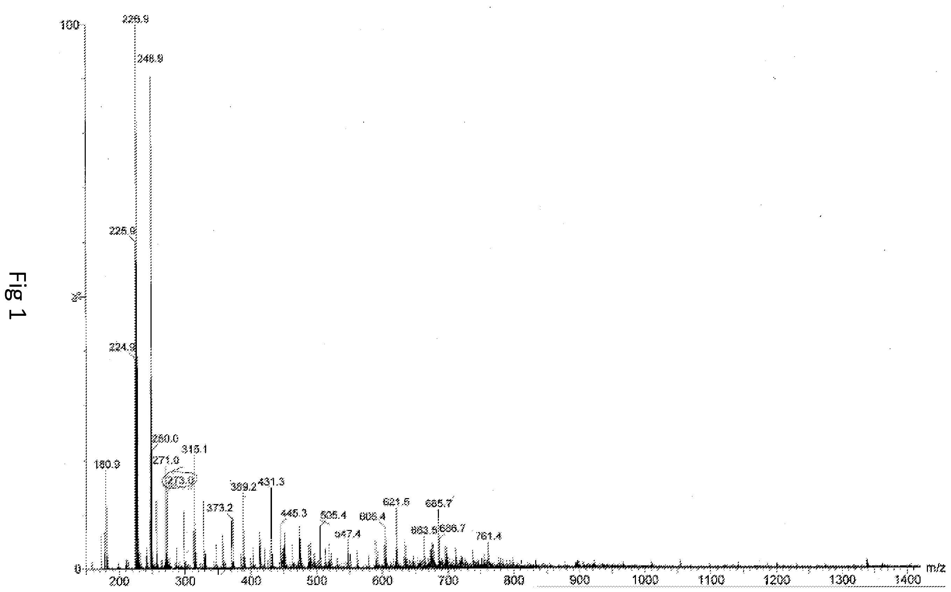

D'autres buts, caractéristiques et avantages de l'invention apparaîtront à la lecture de la description suivante et des exemples de mise en oeuvre d'un procédé selon l'invention donnés uniquement à titre non limitatif et dans lesquels la figure 1 est un spectrogramme de masse d'un milieu de réaction formé par la mise en oeuvre d'un procédé selon l'invention.

### EXEMPLE 1 - Synthèse d'esters carboniques de glycérol cycliques α/α'-acylés à titre de précurseur.

On réalise la synthèse d'esters carboniques de glycérol cycliques α/α'-acylés, en particulier de l'ester carbonique de glycérol α/α'-heptanoïque (ECG-C7), de l'ester carbonique de glycérol α/α'-nonanoïque (ECG-C9), de l'ester carbonique de glycérol α/α'-undécylénoïque (ECG-C11:1) et de l'ester carbonique de glycérol α/α'-oléique (ECG-C18:1) par estérification du carbonate de glycérol cyclique α/α'-hydroxylé par l'acide gras correspondant.

Dans un réacteur de 500 mL équipé d'un dispositif d'agitation mécanique, d'un dispositif de mise sous pression réduite et d'un dispositif « Dean-Stark » d'élimination de l'eau formée, on place 1,64 moles d'acide gras et 0,0078 moles d'acide 4-méthylbenzènesulfonique (CAS n° 6192-52-5, acide para-toluène-sulfonique, ApTs). On porte la température du mélange à la température de 110°C sous pression réduite de 800 hPa pendant une durée de 15 min. On ajoute ensuite goutte à goutte dans le réacteur 0,84 moles de carbonate de glycérol cyclique α,/α,'-hydroxylé sous agitation mécanique à 800 rotations par minutes (rpm) pendant 15 min. On place le réacteur dans un bain d'huile porté à la température de 110°C et sous agitation mécanique (800 rpm) pendant 3 heures.

### EXEMPLE 2 - Purification des esters carboniques de glycérol cycliques α/α'-acylés.

On dilue le milieu réactionnel dans 150 mL d'éther éthylique et on place le mélange obtenu dans une ampoule à décanter de 1 L. On lave le mélange successivement avec 4 volumes d'eau saturée en NaCl jusqu'à neutralité de la phase aqueuse. La phase organique lavée est séchée sur du sulfate de magnésium, puis est séparée du sulfate de magnésium hydraté par filtration. L'éther de la phase organique est éliminé par évaporation sous pression réduite. On obtient une masse de produit sec de 277g. L'ester carbonique de glycérol cyclique α/α'-acylé est séparé des acides gras en excès par distillation en film mince sous pression réduite (0,6 hPa) à une température inférieure à la température d'ébullition de l'acide gras sous cette pression réduite et inférieure à 155°C. On obtient l'ester carbonique de glycérol cyclique α/α'-acylé dont la pureté évaluée par chromatographie en phase gazeuse est comprise entre 85 % et 95 %.

### EXEMPLE 3 - Synthèse de l'ester carbonique de glycérol cyclique α/α'-acétylé (ECG-C2).

Dans un ballon tricol en verre de 2 L équipé d'un agitateur mécanique et d'un dispositif « Dean-Stark » d'élimination de l'eau formée comprenant un réfrigérant et placé dans un bain d'huile, on introduit 472 g de carbonate de glycérol cyclique (4-(hydroxyméthyle)-1,3-dioxolan-2-one, CAS 931-40-8) et 4 g de résine Lewatit K2431. On ajoute 6 moles d'anhydride acétique goutte à goutte dans le réacteur de façon à contrôler et maintenir la température du réacteur à 50°C sous agitation mécanique de 800 rpm pendant 4 heures.

On élimine l'excès d'anhydride acétique par évaporation à la température de 60°C et sous pression réduite de 55 hPa. On purifie l'ester carbonique linéaire de glycérol α/α'-acétylé par la technique du film mince conduite dans un évaporateur/séparateur à la température de 170°C et sous pression réduite de 0,33 hPa. On obtient l'ester carbonique de glycérol α/α'-acétylé dont la pureté évaluée par chromatographie en phase gazeuse est comprise entre 98 % et 99%.

Les caractéristiques structurelles des esters carboniques de glycérol cycliques α/α'-acylés obtenus aux exemples 1, 2 et 3 sont données au tableau 1 ci-après.

**Tableau 1**

| | Pureté, % | RMN ¹³C, ¹H | IRTF | Spectrométrie de masse, m/z |
|---|---|---|---|---|
| ECG-C2 | 98 | conforme | conforme | 160,1 |
| ECG-C7 | 94 | conforme | conforme | 230,2 |
| ECG-C9 | 95 | conforme | conforme | 258,3 |
| ECG-C11:1 | 85 | conforme | conforme | 284,3 |
| ECG-C18 :1 | 96 | conforme | conforme | 382,5 |

### EXEMPLE 4 - Oligomérisation de l'ester carbonique de glycérol cyclique α/α'-acétylé (ECG-C2).

On réalise l'oligomérisation de l'ester carbonique de glycérol α/α'-acétylé (ECG-C2) obtenu à l'exemple 3 en présence d'un catalyseur métallique, de glycérol à titre d'amorceur organique, et dans les conditions décrites au tableau 2 ci-après.

**Tableau 2**

| Masse ECG-C2, g | Catalyseur métallique | | Amorceur Glycérol, g | Conditions | TC, % | Masses molaires en nombre |
|---|---|---|---|---|---|---|
| | Nature | Masse, mg | | | | |
| 4,25 | Stéarate de zinc Zn(C₁₈H₃₅O₂)₂ | 25 | 1,5 | 160°C, Pₐₜₘ, 2h | 59 | 393, 195, 64 |
| 8,5 | Zn(C₁₈H₃₅O₂)₂ | 25 | 1,5 | 160°C, Pₐₜₘ, 2h | 95 | 970, 688, 352, 274, 202, 190 |
| 42,5 | Zn(C₁₈H₃₅O₂)₂ | 250 | 7,5 | 160°C, 1800 hPa, 2h | 61 | 321, 157, 91 |
| 21,25 | Zn(C₁₈H₃₅O₂)₂ | 125 | 3,75 | 160°C, Pₐₜₘ, 2h | 84 | 714, 336, 206, 139, 92 |
| 21,5 | Zn(C₁₈H₃₅O₂)₂ | 125 | 3,75 | 160°C, Pₐₜₘ, 2h | 99,2 | 405, 253, 172, 93 |
| 21,5 | Zn(C₁₈H₃₅O₂)₂ | 125 | 3,75 | 160°C, Pₐₜₘ, 2h | 98,4 | 574, 320, 160, 95 |
| 21,5 | Zn(C₁₈H₃₅O₂)₂ | 125 | 3,75 | 160°C, Pₐₜₘ, 2h | 98,4 | 395, 189, 140,92 |
| 21,5 | Zn(C₁₈H₃₅O₂)₂ | 125 | 3,75 | 160°C, Pₐₜₘ, 2h | 98,4 | 395, 189, 140, 192 |
| 8,5 | ZnSO₄ | 50 | 1,75 | 160°C, 3400 hPa, 2h | 76 | 420, 173, 122, 84, 36 |
| 9 | ZnSO₄ | 50 | 1,7 | 160°C, Pₐₜₘ, 30h | 55 | 431, 160, 83 |
| 21,25 | ZnSO₄ | 125 | 3,75 | 160°C, Pₐₜₘ, 2h | 66 | 389, 159, 83 |
| 21,5 | FeSO₄8H₂O | 60 | 3,75 | 160°C, Pₐₜₘ, 2h | 40,3 | 446, 162, 96 |
| 21,5 | ZnO | 55 | 3,75 | 160°C, Pₐₜₘ, 2h | 46 | 322, 156, 95 |
| 21,5 | MnSO₄, 1H₂O | 118 | 3,75 | 160°C, Pₐₜₘ, 2h | 51 | 327, 156, 96 |
| 21,5 | MnSO₄, 1H₂O | 85 | 3,75 | 160°C, Pₐₜₘ, 2h | 34 | 323, 154, 94 |
| 21,5 | ZnSO₄, 1H₂O | 125 | 3,75 | 160°C, Pₐₜₘ, 2h | 36 | 327, 157, 94 |
| 21,5 | CaCO₃ | 70 | 3,75 | 160°C, Pₐₜₘ, 2h | 31 | 324, 154, 94 |
| 21,5 | Na₂CO₃ | 74 | 3,75 | 160°C, P ₐₜₘ, 2h | 98 | 632, 314, 192, 137, 99 |

La valeur TC (%) indique le taux de conversion de l'ester carbonique de glycérol cyclique α/α'-acylé de départ. Les valeurs de masse molaire en nombre sont obtenues par analyse du milieu de réaction en chromatographie par perméation de gel sur colonne PLgel 3 µm MIXED-E. Les esters carboniques linéaires de glycérol α/α'-acylés sont détectés en sortie de colonne par réfractométrie et les masses moléculaires sont déterminées par comparaison avec des standards de polystyrène.

Un exemple de spectre de masse réalisé sur un milieu de réaction obtenu par mise en oeuvre d'un procédé d'oligomérisation de l'ester carbonique de glycérol α/α'-acétylé (ECG-C2) tel que décrit à l'exemple 4 est représenté en figure 1. Sont détectés des signaux correspondant à des ions moléculaires et fragments de valeurs m/z comprises entre 180,9 et 761,4 et correspondant à des oligomères de formules (A), (B) et (C) suivantes : 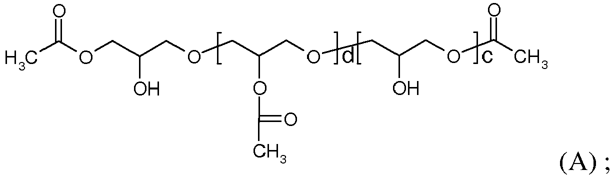 dans laquelle c peut prendre la valeur 1, 2 ou 4 et d peut prendre la valeur 1, 2, 3 ou 4; 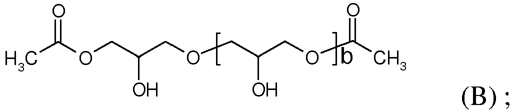 dans laquelle b peut prendre la valeur 1, 2, ou 3; 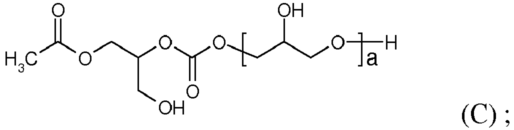 dans laquelle a est 1, 2, 3, 4, 5, 6, 7 ou 8, et ; 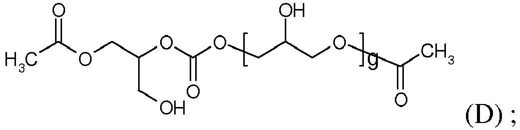 dans laquelle g peut prendre la valeur 1, 2, 3, 4, 5, 6, 7, 8, 9 ou 10.

### EXEMPLE 5 - Synthèse d'esters carboniques linéaires de glycérol α/α'-acylés à partir d'esters carboniques de glycérol cycliques α/α'-acylés (ECG-C2, ECG-C7, ECG-C9, ECG-C11:1 et ECG-C18:1).

On réalise une oligomérisation des esters carboniques de glycérol cycliques α/α'-acylés selon l'invention dans les conditions décrites au tableau 3 ci-après.

**Tableau 3**

| ECG, masse | Catalyseur métallique | | Amorceur Glycérol, g | Conditions | TC, % | Masses molaires en nombre |
|---|---|---|---|---|---|---|
| | Nature | Masse, mg | | | | |
| ECG-C2, 21,25 g | Zn(C₁₈H₃₅O₂)₂ | 125 | 3,75 | 160°C, Pₐₜₘ, 2h | 98 | 714, 335, 206, 139, 92 |
| ECG-C2, 21,25 g | ZnSO₄ | 125 | 3,75 | 160°C, Pₐₜₘ, 2h | 66 | 389, 159, 83 |
| ECG-C7, 20 g | ZnSO₄ | 113 | 2,42 | 200°C, Pₐₜₘ, 2h | 64 | 639, 420, 252, 96 |
| ECG-C9, 20 g | ZnSO₄ | 110 | 2,15 | 180°C, Pₐₜₘ, 2h | 88 | 992, 541, 303, 90 |
| ECG-C11:1, 10 g | ZnSO₄ | 86 | 1,3 | 190°C, P ₐₜₘ, 2h | 98 | 7632, 2113,1084, 750, 486 |
| ECG-C18:1, 10 g | ZnSO₄ | 50 | 0,7 | 200°C, Pₐₜₘ, 2h | 97 | 3724, 1787, 1169, 613, 94 |

La valeur TC (%) indique le taux de conversion de l'ester carbonique de glycérol cyclique α/α'-acylé de départ. Les valeurs de masse molaire apparente sont obtenues par analyse du milieu de réaction par chromatographie par perméation de gel. On obtient des oligomères de masse molaire apparente atteignant 7600 Da.

Il va de soi que l'invention peut faire l'objet de nombreuses variantes de réalisation et applications. En particulier le procédé de synthèse des esters carboniques linéaires α/α'-acylés est sujet à des infinités de variantes, en particulier concernant la température de réaction, la pression de réaction, la proportion massique de catalyseur métallique, d'ester(s) carbonique(s) de glycérol cycliques α/α'-acylés et d'amorceur organique.

Bien entendu, cette description est donnée à titre d'exemple illustratif uniquement et l'homme du métier pourra y apporter de nombreuses modifications, variantes et applications sans sortir de la portée de l'invention, en particulier en faisant varier la nature et les proportions des réactifs et catalyseurs utilisés, la durée et la température de réaction ainsi que la pression autogène.

## Revendications

1. Procédé de synthèse d'oligomères de glycérol acylés comprenant un nombre de monomères compris entre 2 et 50, **caractérisé en ce qu'**on fait réagir :
▪ au moins un précurseur choisi dans le groupe formé des esters carboniques de glycérol cycliques α,/α,'-acylés de formule (IV) suivante : 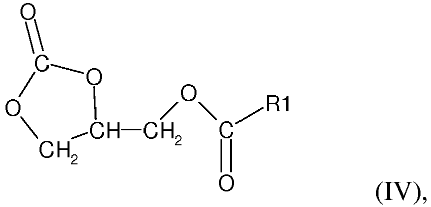 dans laquelle ;
R1 représente un groupement organique formés d'au moins deux atomes liés par des liaisons covalentes et appartenant au groupe formé du carbone (C), de l'hydrogène (H), de l'oxygène (O) et de l'azote (N), et ;
▪ au moins un catalyseur métallique choisi dans le groupe formé des sels de cations métalliques, des composés organométalliques et des oxydes métalliques, et ;
▪ au moins un amorceur organique choisi dans le groupe formé des composés organiques hydroxylés,
à une température de réaction inférieure à 220°C.

2. Procédé selon la revendication 1, **caractérisé en ce que** dans une première étape, on mélange et on chauffe le(s) précurseur(s), le(s) catalyseur(s) et l'(les) amorceur(s) organique(s) dans un réacteur clos étanche aux gaz de façon à atteindre la température de réaction et une pression, dite pression autogène, supérieure à la pression atmosphérique dans ledit réacteur clos, puis, à la température de réaction, dans une deuxième étape, on réalise une fuite de composition gazeuse de façon à diminuer la pression dans le réacteur et on maintient la température de réaction dans le réacteur pendant une durée supérieure à 5 minutes.

3. Procédé selon l'une des revendications 1 ou 2, **caractérisé en ce qu'**on utilise le glycérol à titre d'amorceur organique.

4. Procédé selon l'une des revendications 2 ou 3, **caractérisé en ce que** lors de la deuxième étape on laisse en contact le(s) précurseur(s), le(s) catalyseur(s) et le(s) amorceurs organiques à la température de réaction pendant une durée comprise entre 5 minutes et 3 heures.

5. Procédé selon l'une des revendications 1 à 4, **caractérisé en ce que** au moins un catalyseur métallique est choisi dans le groupe formé du sulfate de zinc (ZnSO₄), du stéarate de zinc (Zn(C₁₈H₃₅O₂)₂), du sulfate de fer (FeSO₄), du phosphate ferrique (FePO₄), du sulfate de manganèse (MnSO₄), de l'oxyde de zinc (ZnO), du carbonate de calcium (Ca₂CO₃), du carbonate de sodium (Na₂CO₃), du carbonate de potassium (K₂CO₃) et du sulfate de sodium (Na₂SO₄).

6. Procédé selon l'une des revendications 1 à 5, **caractérisé en ce que** le groupement R1 est choisi dans le groupe formé des groupements alkyles comprenant de 1 à 22 atomes de carbone.

7. Procédé selon l'une des revendications 1 à 6, **caractérisé en ce que** le groupement R1 est choisi dans le groupe formé du méthyle (-CH₃), de l'éthyle (-CH₂-CH₃), du *n*-propyle (-CH₂-CH₂-CH₃), de l'*iso*-propyle (-CH(CH₃)₂), du *n*-butyle (-CH₂-CH₂-CH₂-CH₃), de l'*iso*-butyle (-CH₂-CH(CH₃)₂), du *tertio*-butyle (-C(CH₃)₃), du *n*-pentyle (-CH₂-(CH₂)₃-CH₃), du *n*-hexyle (-(CH₂)₅-CH₃), du *n*-octyle (-(CH₂)₇-CH₃), de l'undécyle (-(CH₂)₁₀-CH₃), du pentadécyle (-(CH₂)₁₄-CH₃) et de l'heptadécyle (-(CH₂)₁₆-CH₃).

8. Procédé selon l'une des revendications 1 à 7, **caractérisé en ce qu'**on on choisit au moins un précurseur dans le groupe formé de l'acétate de 4-méthyl-1,3-dioxolan-2-one, du *n*-propanoate de 4-méthyl-1,3-dioxolan-2-one, du *n*-butanoate de 4-méthyl-1,3-dioxolan-2-one, du 2-méthyl-propanoate de 4-méthyl-1,3-dioxolan-2-one, du *n*-pentanoate de 4-méthyl-1,3-dioxolan-2-one, du 3-méthyl-butanoate de 4-méthyl-1,3-dioxolan-2-one, du 2,2-diméthyl-propanoate de 4-méthyl-1,3-dioxolan-2-one, du *n*-hexanoate de 4-méthyl-1,3-dioxolan-2-one, du *n*-heptanoate de 4-méthyl-1,3-dioxolan-2-one, du *n*-octanoate de 4-méthyl-1,3-dioxolan-2-one, du *n*-nonanoate de 4-méthyl-1,3-dioxolan-2-one, du *n*-dodécanoate de 4-méthyl-1,3-dioxolan-2-one, du *n*-hexadécanoate de 4-méthyl-1,3-dioxolan-2-one, du *n*-heptadécanoate de 4-méthyl-1,3-dioxolan-2-one, du 2-ène-undécanoate de 4-méthyl-1,3-dioxolan-2-one, du 9-ène-hexadecanoate de 4-méthyl-1,3-dioxolan-2-one et du 9-ène-octadecanoate de 4-méthyl-1,3-dioxolan-2-one.

9. Composition organique **caractérisée en ce qu'**elle comprend :
- au moins un oligomère de glycérol acylé comprenant un nombre de monomères compris entre 2 et 50, et ;
- et au moins un ester carbonique de glycérol cyclique α,/α,'-acylé de formule (IV) suivante : 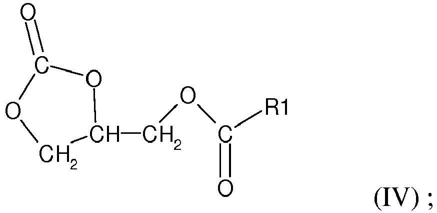 dans laquelle R1 représente un groupement organique formés d'au moins deux atomes liés par des liaisons covalentes et appartentant au groupe formé du carbone (C), de l'hydrogène (H) et de l'oxygène (O).

10. Composition organique selon la revendication 9 **caractérisée en ce qu'**elle comprend :
- au moins un ester carbonique linéaire de glycérol α/α'-acylé de formule (I) générale suivante: 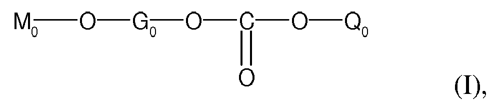 dans laquelle :
▪ M₀ est choisi dans le groupe formé d'un hydrogène (H) et d'un groupement organique d'au moins deux atomes liés par des liaisons covalentes et appartenant au groupe formé du carbone (C), de l'hydrogène (H) et de l'oxygène (O) ;
▪ Q₀ représente un groupement organique d'au moins deux atomes liés par des liaisons covalentes et appartenant au groupe formé du carbone (C), de l'hydrogène (H) et de l'oxygène (O) ;
▪ G0 est choisi dans le groupe formé de :
➢ 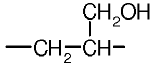 et ;
➢des groupements d'atomes de formule (II) générale suivante : 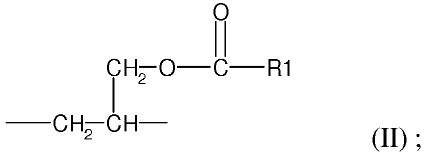 dans laquelle R1 représente un groupement organique formés d'au moins deux atomes liés par des liaisons covalentes et appartenant au groupe formé du carbone (C), de l'hydrogène (H) et de l'oxygène (O).

11. Composition selon l'une des revendications 9 ou 10, **caractérisée en ce qu'**elle comprend aussi au moins un catalyseur métallique choisi dans le groupe formé des sels de cations métalliques des composés organométalliques et des oxydes métalliques.

12. Composition selon l'une des revendications 9 à 11, **caractérisée en ce qu'**elle comprend aussi au moins un amorceur organique choisi dans le groupe formé des composés organiques hydroxylés.

13. Composition organique selon l'une des revendications 9 à 12, **caractérisée en ce qu'**elle comprend aussi au moins un composé de formule (VII) générale suivante : 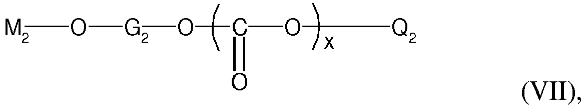
- M₂ est choisi dans le groupe formé d'un hydrogène (H) et d'un groupement organique d'au moins deux atomes liés par des liaisons covalentes et appartenant au groupe formé du carbone (C), de l'hydrogène (H) et de l'oxygène (O) ;
- Q₂ représente un groupement organique d'au moins deux atomes liés par des liaisons covalentes et appartenant au groupe formé du carbone (C), de l'hydrogène (H) et de l'oxygène (O) ;
- x est un nombre entier égal à 0 ou à 1 ;
- G₂ est un groupement d'atomes de formule (II) générale suivante : 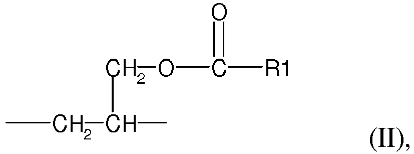 et ;
dans laquelle R1 est choisi dans le groupe formé des groupements formés d'au moins deux atomes liés par des liaisons covalentes et appartenant au groupe formé du carbone (C), de l'hydrogène (H) et de l'oxygène (O).

## Patentansprüche

1. Verfahren zur Synthese von acylierten Glycerolmonomeren, umfassend eine Anzahl von Monomeren im Bereich von 2 und 50, **dadurch gekennzeichnet, dass** man Folgendes umsetzt:
▪ mindestens einen Vorläufer, ausgewählt aus der Gruppe, gebildet aus Carbonsäureestern von cyclischem, α/α'-acyliertem Glycerol der folgenden Formel (IV): 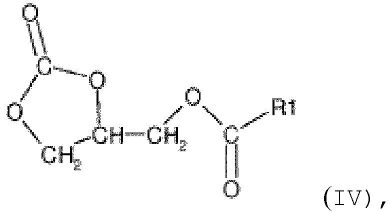 in welcher;
R1 eine organische Gruppierung, gebildet aus mindestens zwei durch kovalente Bindungen verbundenen und der Gruppe, bestehend aus Kohlenstoff (C), Wasserstoff (H), Sauerstoff (O) und Stickstoff (N), zugehörigen Atomen darstellt, und;
▪ mindestens einen metallischen Katalysator, ausgewählt aus der Gruppe, gebildet aus Salzen von Metallkationen, organometallischen Verbindungen und Metalloxiden und;
▪ mindestens einen organischen Initiator, ausgewählt aus der Gruppe, gebildet aus hydroxylierten organischen Verbindungen,
bei einer Reaktionstemperatur von weniger als 220 °C.

2. Verfahren nach Anspruch 1, **dadurch gekennzeichnet, dass** in einem ersten Schritt der/die Vorläufer, der/die Katalysator(en) und der/die Initiator(en) in einem gasdicht verschlossenen Reaktor gemischt und erhitzt werden, um die Reaktionstemperatur und einen Druck, den autogenen Druck, oberhalb des Umgebungsdrucks in dem verschlossenen Reaktor zu erreichen, wobei anschließend in einem zweiten Schritt, bei der Reaktionstemperatur, ein Ablassen der Gaszusammensetzung auf eine Weise durchgeführt wird, um den Druck im Reaktor zu verringern, und die Reaktionstemperatur im Reaktor während einer Dauer von länger als 5 Minuten aufrecht erhalten wird.

3. Verfahren nach einem der Ansprüche 1 oder 2, **dadurch gekennzeichnet, dass** als organischer Initiator Glycerol verwendet wird.

4. Verfahren nach einem der Ansprüche 2 oder 3, **dadurch gekennzeichnet, dass** im zweiten Schritt der/die Vorläufer, der/die Katalysator(en) und der/die organischen Initiator(en) während einer Dauer im Bereich von 5 Minuten und 3 Stunden bei der Reaktionstemperatur in Kontakt belassen werden.

5. Verfahren nach einem der Ansprüche 1 bis 4, **dadurch gekennzeichnet, dass** mindestens ein Metallkatalysator ausgewählt ist aus der Gruppe, gebildet aus Zinksulfat (ZnSO₄), Zinkstearat (Zn(C₁₈H₃₅O₂)₂), Eisen (II) sulfat (FeSO₄), Eisen (III)phosphat (FePO₄), Mangansulfat (MnSO₄), Zinkoxid (ZnO), Calciumcarbonat (Ca₂CO₃), Natriumcarbonat (Na₂CO₃), Kaliumcarbonat (K₂CO₃) und Natriumsulfat (Na₂SO₄).

6. Verfahren nach einem der Ansprüche 1 bis 5, **dadurch gekennzeichnet, dass** die Gruppierung R1 ausgewählt ist aus der Gruppe, gebildet aus Alkylgruppierungen umfassend 1 bis 22 Kohlenstoffatome.

7. Verfahren nach einem der Ansprüche 1 bis 6, **dadurch gekennzeichnet, dass** die Gruppierung R1 ausgewählt ist aus der Gruppe, gebildet aus Methyl (-CH₃), Ethyl (-CH₂-CH₃), *n*-Propyl (-CH₂-CH₂-CH₃), *iso-*Propyl (-CH(CH₃)₂), *n*-Butyl (-CH₂-CH₂-CH₂-CH₃), iso-Butyl (-CH₂-CH(CH₃)₂), *tert*-Butyl (-C(CH₃)₃), *n*-Pentyl (-CH₂-(CH₂)₃-CH₃), *n*-Hexyl (-(CH₂)₅-CH₃), *n*-Octyl (-(CH₂)₇-CH₃), Undecyl (-(CH₂)₁₀-CH₃), Pentadecyl (-(CH₂)₁₄-CH₃) und Heptadecyl (-(CH₂)₁₆-CH₃).

8. Verfahren nach einem der Ansprüche 1 bis 7, **dadurch gekennzeichnet, dass** mindestens ein Vorläufer ausgewählt wird aus der Gruppe, gebildet aus 4-Methyl-1,3-dioxolan-2-on-acetat, 4-Methyl-1,3-dioxolan-2-on-*n-*propanoat, 4-Methyl-1,3-dioxolan-2-on-*n*-butanoat, 4-Methyl-1,3-dioxolan-2-on-2-methylpropanoat, 4-Methyl-1,3-dioxolan-2-on-*n*-pentanoat, 4-Methyl-1,3-dioxolan-2-on-3-methylbutanoat, 4-Methyl-1,3-dioxolan-2-on-2,2-dimethylpropanoat, 4-Methyl-1,3-dioxolan-2-on-n-hexanoat, 4-Methyl-1,3-dioxolan-2-on-*n*-heptanoat, 4-Methyl-1,3-dioxolan-2-on-*n*-octanoat, 4-Methyl-1,3-dioxolan-2-on-*n*-nonanoat, 4-Methyl-1,3-dioxolan-2-on-*n-*dodecanoat, 4-Methyl-1,3-dioxolan-2-on-*n*-hexadecanoat, 4-Methyl-1,3-dioxolan-2-on-*n*-heptadecanoat, 4-Methyl-1,3-dioxolan-2-on-undec-2-enoat, 4-Methyl-1,3-dioxolan-2-on-hexadec-9-enoat und 4-Methyl-1,3-dioxolan-2-on-octadec-9-enoat.

9. Organische Zusammensetzung, **dadurch gekennzeichnet, dass** sie Folgendes umfasst:
- mindestens ein acyliertes Glycerololigomer, umfassend eine Anzahl von Monomeren im Bereich von 2 und 50 und;
- und mindestens einen Carbonsäureester von α/α'-acyliertem cyclischem Glycerol der folgenden Formel (IV) : 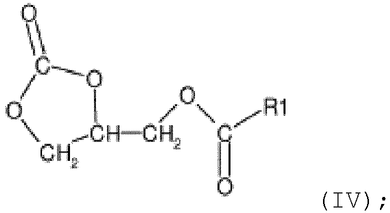 in welcher R1 eine organische Gruppierung, gebildet aus mindestens zwei durch kovalente Bindungen verbundenen und der Gruppe, gebildet aus Kohlenstoff (C), Wasserstoff (H) und Sauerstoff (O), zugehörigen Atomen darstellt.

10. Organische Zusammensetzung nach Anspruch 9, **dadurch gekennzeichnet, dass** sie Folgendes umfasst:
- mindestens einen Carbonsäureester von α/α'-acyliertem linearem Glycerol der folgenden allgemeinen Formel (I): 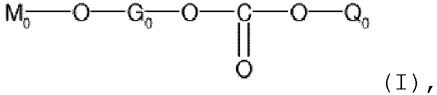 in welcher:
▪ M₀ ausgewählt ist aus der Gruppe, gebildet aus Wasserstoff (H) und einer organischen Gruppierung von mindestens zwei durch kovalente Bindungen verbundenen und der Gruppe, gebildet aus Kohlenstoff (C), Wasserstoff (H) und Sauerstoff (O), zugehörigen Atomen;
▪ Q₀ eine organische Gruppierung von mindestens zwei durch kovalente Bindungen verbundenen und der Gruppe, gebildet aus Kohlenstoff (C), Wasserstoff (H) und Sauerstoff (O), zugehörigen Atomen darstellt;
▪ G₀ ausgewählt ist aus der Gruppe, gebildet aus:
➢ 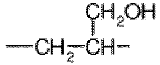 und;
➢ Gruppierungen von Atomen von folgender allgemeinen Formel (II): 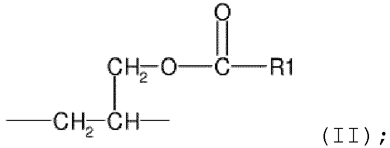 in welcher R1 eine organische Gruppierung, gebildet aus mindestens zwei durch kovalente Bindungen verbundenen und der Gruppe, gebildet aus Kohlenstoff (C), Wasserstoff (H) und Sauerstoff (O), zugehörigen Atomen darstellt.

11. Zusammensetzung nach einem der Ansprüche 9 oder 10, **dadurch gekennzeichnet, dass** sie ebenfalls mindestens einen Metallkatalysator umfasst, ausgewählt aus der Gruppe, gebildet aus Salzen von Metallkationen, organometallischen Verbindungen und Metalloxiden.

12. Zusammensetzung nach einem der Ansprüche 9 bis 11, **dadurch gekennzeichnet, dass** sie ebenfalls mindestens einen organischen Initiator umfasst, ausgewählt aus der Gruppe, gebildet aus hydroxylierten organischen Verbindungen.

13. Organische Zusammensetzung nach einem der Ansprüche 9 bis 12, **dadurch gekennzeichnet, dass** sie ebenfalls mindestens eine Verbindung von folgender allgemeinen Formel (VII) umfasst: 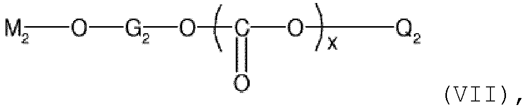 in welcher:
- M₂ ausgewählt ist aus der Gruppe, gebildet aus Wasserstoff (H) und einer organischen Gruppierung von mindestens zwei durch kovalente Bindungen verbundenen und der Gruppe, gebildet aus Kohlenstoff (C), Wasserstoff (H) und Sauerstoff (O), zugehörigen Atomen;
- Q₂ eine organische Gruppierung von mindestens zwei durch kovalente Bindungen verbundenen und der Gruppe, gebildet aus Kohlenstoff (C), Wasserstoff (H) und Sauerstoff (O), zugehörigen Atomen darstellt;
- x eine ganze Zahl gleich 0 oder 1 ist;
- G₂ eine Atomgruppierung der folgenden allgemeinen Formel (II) ist: 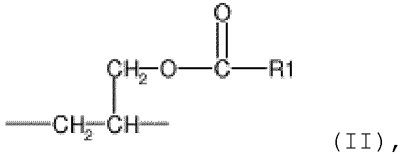 und;
in welcher R1 ausgewählt ist aus der Gruppe, gebildet aus Gruppierungen, gebildet aus mindestens zwei durch kovalente Bindungen verbundenen und der Gruppe, gebildet aus Kohlenstoff (C), Wasserstoff (H) und Sauerstoff (O), zugehörigen Atomen.

## Claims

1. Method for synthesis of acylated glycerol oligomers comprising a number of monomers equal to between 2 and 50, **characterised in that** the following are made to react:
▪ at least one precursor chosen from the group composed of cyclic α/α'-acylated carbonic esters of glycerol with the following formula (IV): 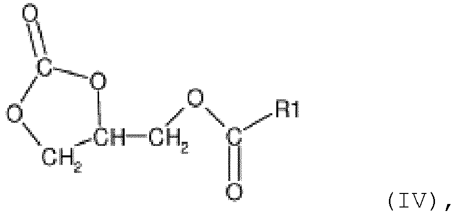 in which;
R1 represents an organic group composed of at least two atoms bonded by covalent bonds and belonging to the group composed of carbon (C), hydrogen (H), oxygen (O) and nitrogen (N), and;
▪ at least one metallic catalyst chosen from the group composed of metallic cation salts, organometallic compounds and metallic compounds, and;
▪ at least one organic primer chosen from the group composed of hydroxylated organic compounds,
at a reaction temperature of less than 220°C.

2. Method according to claim 1, **characterised in that** a first step consists of mixing and heating the precursor(s), the catalyst(s) and the organic primer(s) in a closed gas tight reactor to reach the reaction temperature and a pressure called the autogenic pressure, higher than atmospheric pressure in said closed reactor, and then a second step at the reaction temperature consists of creating a leak of the gas composition so as to reduce the pressure in the reactor and holding the reaction temperature in the reactor for a duration of more than 5 minutes.

3. Method according to one of claims 1 or 2, **characterised in that** glycerol is used as the organic primer.

4. Method according to one of claims 2 or 3, **characterised in that** during the second step, the precursor(s), the catalyst(s) and the organic primer(s) are left in contact at the reaction temperature for a duration of between 5 minutes and 3 hours.

5. Method according to one of claims 1 to 4, **characterised in that** at least one metallic catalyst is chosen from the group composed of zinc sulphate (ZnSO₄), zinc stearate (Zn(C₁₈H₃₅O₂)₂), iron sulphate (FeSO₄), ferric phosphate (FePO₄), manganese sulphate (MnSO₄), zinc oxide (ZnO), calcium carbonate (Ca₂CO₃), sodium carbonate (Na₂CO₃), potassium carbonate (K₂CO₃) and sodium sulfate (Na₂SO₄).

6. Method according to one of claims 1 to 5, **characterised in that** the R1 group is chosen from the group composed of alkyl groups comprising 1 to 22 carbon atoms.

7. Method according to one of claims 1 to 6, **characterised in that** the R1 group is chosen among the group composed of methyl (-CH₃), ethyl (-CH₂-CH₃), *n-*propyle (-CH₂-CH₂-CH₃), *iso*-propyl (-CH(CH₃)₂), *n*-butyl (-CH₂-CH₂-CH₂-CH₃), *iso*-butyl (-CH₂-CH(CH₃)₂), *tertio-*butyl (-C(CH₃)₃), *n*-pentyl (-CH₂-(CH₂)₃-CH₃), *n*-hexyl (-(CH₂)₅-CH₃), *n*-octyl (-(CH₂)₇-CH₃), undecyl (-(CH₂)₁₀-CH₃), pentadecyl (-(CH₂)₁₄-CH₃) and heptadecyl (-(CH₂)₁₆-CH₃).

8. Method according to one of claims 1 to 7, **characterised in that** at least one precursor is chosen from the group composed of 4-methyl-1,3-dioxolane-2-one acetate, 4-methyl-1,3-dioxolane-2-one *n*-propanoate, 4-methyl-1,3-dioxolane-2-one *n*-butanoate, 4-methyl-1,3-dioxolane-2-one 2-methyl-propanoate, 4-methyl-1,3-dioxolane-2-one *n*-pentanoate, 4-methyl-1,3-dioxolane-2-one 3-methyl-butanoate, 4-methyl-1,3-dioxolane-2-one 2,2-dimethyl-propanoate, 4-methyl-1,3-dioxolane-2-one n-hexanoate, 4-methyl-1,3-dioxolane-2-one *n*-heptanoate, 4-methyl-1,3-dioxolane-2-one *n*-octanoate, 4-methyl-1,3-dioxolane-2-one *n*-nonanoate, 4-methyl-1,3-dioxolane-2-one *n*-dodecanoate, 4-methyl-1,3-dioxolane-2-one *n-*hexadecanoate, 4-methyl-1,3-dioxolane-2-one *n-*heptadecanoate, 4-methyl-1,3-dioxolane-2-one 2-ene-undecanoate, 4-methyl-1,3-dioxolane-2-one 9-ene-hexadecanoate and 4-methyl-1,3-dioxolane-2-one 9-ene-octadecanoate.

9. Organic composition **characterised in that** it comprises:
- at least one acylated glycerol oligomer comprising a number of monomers equal to between 2 and 50, and;
- and at least one cyclic α/α'-acylated carbonic ester of glycerol with the following formula (IV): 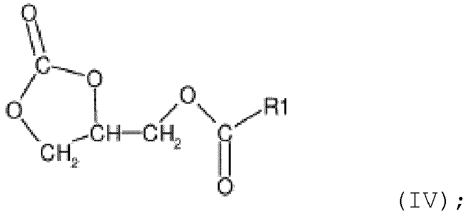 in which R1 represents an organic group composed of at least two atoms bonded by covalent bonds and belonging to the group composed of carbon (C), hydrogen (H) and oxygen (O).

10. Organic composition according to claim 9, **characterised in that** it comprises:
- at least one linear α/α'-acylated carbonic ester of glycerol with the following general formula (I): 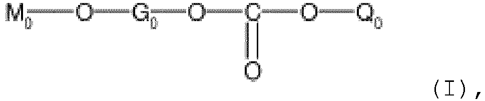 in which;
▪ M₀ is chosen from the group composed of one hydrogen (H) and an organic group of at least two atoms bonded by covalent bonds and belonging to the group composed of carbon (C), hydrogen (H) and oxygen (0);
▪ Q₀ represents an organic group composed of at least two atoms bonded by covalent bonds and belonging to the group composed of carbon (C), hydrogen (H) and oxygen (O) ;
▪ G₀ is chosen from the group composed of:
➢ 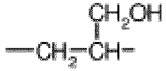 and;
➢ groups of atoms with the following general formula (II): 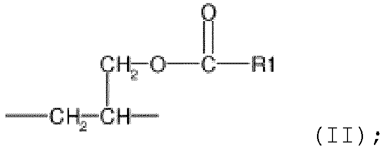 in which R1 represents an organic group composed of at least two atoms bonded by covalent bonds and belonging to the group composed of carbon (C), hydrogen (H) and oxygen (O).

11. Composition according to one of claims 9 or 10, **characterised in that** it also comprises at least one metallic catalyst chosen from the group composed of metallic cation salts of organometallic compounds and metallic oxides.

12. Composition according to one of claims 9 to 11, **characterised in that** it also comprises at least one organic primer chosen from the group composed of hydroxylated organic compounds.

13. Organic composition according to one of claims 9 to 12, **characterised in that** it also comprises at least one compound with the following general formula (VII) : 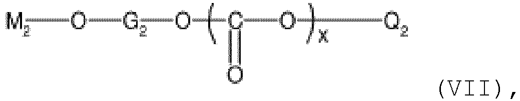 in which;
- M₂ is chosen from the group composed of one hydrogen (H) and an organic group of at least two atoms bonded by covalent bonds and belonging to the group composed of carbon (C), hydrogen (H) and oxygen (0);
- Q₂ represents an organic group composed of at least two atoms bonded by covalent bonds and belonging to the group composed of carbon (C), hydrogen (H) and oxygen (O) ;
- x is an integer number equal to 0 or 1;
- G₂ is a group of atoms with formula (II) with the following general formula: 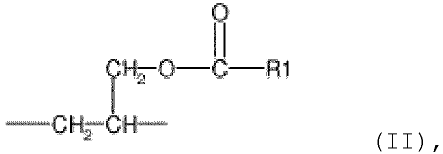
and;
in which R1 is chosen from the group composed of at least two atoms bonded by covalent bonds and belonging to the group composed of carbon (C), hydrogen (H) and oxygen (O).
